# EUROPEAN PATENT APPLICATION

(11) **EP 1 723 857 A1**
(43) Date of publication of application: **22.11.2006**
(21) Application number: 06113825.1
(22) Date of filing: 11.05.2006
(51) Int. Cl.: A23L 3/3463, A23L 3/3526

(54) **Synergistic antimicrobial system**

(30) Priority: 16.05.2005 US 130063
(71) Applicant: KRAFT FOODS HOLDINGS, INC., Northfield, Illinois 60093 (US)
(72) Inventor: Zheng Zuoxing, Palatine, IL 60074 (US); Roman Michael G., Grayslake, IL 60030 (US); Monckton Susan P., Carol Stream, IL 60188 (US)
(74) Representative: Smaggasgale, Gillian Helen

(57) **Abstract**

An antimicrobial composition is provided that includes an amount of nisin and ε-poly-L-lysine, effective for preventing an increase in microbial counts in a foodstuff. Nisin and ε-poly-L-lysine act synergistically to prevent increases in microbial counts in foods without affecting the foods taste and physical properties. This synergistic antimicrobial composition may be used to inhibit common food borne pathogens such as *Listeria monocytogenes, Clostridium botulinum, Bacillus cereus, and Staphylococcus aureus,* as well as spoilage organisms such as *Lactococcus* spp., *Lactobacillus* spp., *Leuconostoc* spp., *Streptococcus* spp., etc.

## Description

The invention is directed to an antimicrobial composition effective for preventing growth of microbiological contaminants in food products. More specifically, an antimicrobial composition is provided that is a blend of nisin and ε-poly-L-lysine. Nisin and ε-poly-L-lysine act synergistically to prevent an increase in microbial counts in foodstuffs.

### BACKGROUND

Present food technologists utilize an array of physical, chemical, and biological processes and agents to preserve food. Many chemical compositions exist which kill or inhibit deleterious bacteria and/or other microbes thereby preserving food and preventing spoilage.

Food preservation by inhibition of growth of microbiological contaminants is often difficult. Chemical composition added to foods should be effective for preventing increases in microbial numbers and should not add undesirable flavors or undesirable organoleptic properties to the food. Two compositions known to be used separately in foods for inhibiting microbial growth are nisin and ε-poly-L-lysine.

Nisin is a peptide-like antibacterial substance produced by microorganisms such as *Lactococcus lactis* subsp. *lactis* (formerly known as *Streptococcus lactis).* It has been used to help stabilize various food products and its structure is illustrated in U.S. Patent 5,527,505 to Yamauchi et al. The highest activity preparations of nisin contain about 40 million International Units (IU) per gram. Nisin has no known toxic effects in humans and is widely used in a variety of prepared dairy foods.

The use of nisin in preserving other foods has also been reported. Details on these applications are described in U.S. Patent No. 5,527,505 ("Process for the Manufacture of Fermented Milk"); U.S. Patent No. 5,015,487 ("Use of Lanthionines for Control of Post-processing Contamination in Processed Meat"); Chung et al. (Appl. Envir. Microbiol., 55, 1329-1333 (1989)); U.S. Patent No. 4,584,199 ("Antibotulinal Agents for High Moisture Process Cheese Products"); Muriana et al. (J. Food Protection, 58:1109-1113 (1995)); U.S. Patent No. 6,136,351 ("Stabilization of Fermented Dairy Compositions Using Whey from Nisin-Producing Cultures"); U.S. Patent No. 6,113,954 ("Stabilization of Mayonnaise Spreads Using Whey from Nisin-Producing Cultures"); U.S. Patent No. 6,110,509 ("Stabilization of Cream Cheese Compositions Using Nisin-Producing Cultures"); U.S. Patent No. 6,242,017 ("Stabilization of Cooked Meat Compositions Stabilized by Nisin-Containing Whey and Methods of Making"); and U.S. Patent No. 6,613,364 ("Stabilization of Cooked Meat and Vegetable Compositions Using Whey From Nisin-Producing Cultures and Product Thereof'); U.S. Patent Application Serial No. 091779,756 ("Stabilization of Cooked Pasta Compositions Using Whey From Nisin-Producing Cultures"); Scott V. N. and Taylor S. L. "Effect of nisin on the outgrowth of Clostridium botulinum spores." J. Food Sci., 46: 117-120 (1981); Scott V. N. and Taylor S. L. "Temperature, pH and spore load effects on the ability of nisin to prevent the outgrowth of Clostridium botulinum spores." J. Food Sci., 46: 121-126 (1981); and Broughton, J. D. "Nisin and its uses as a food preservative." Food Technology, 11, 100-17 (1990). These patents and references are incorporated herein by reference in their entireties.

The antibacterial effect of ε-poly-L-lysine is well-known. ε-Poly-L-lysine has been used for preventing proliferation of micro-organisms in food by kneading it together with food or directly spraying it on food (U.S. Patent No. 5,759,844). However, in the case of direct addition of the ε-poly-L-lysine to food, it is generally limited to about 100 mg per 1 kg of food or less since higher amounts adversely affects food taste and physical properties.

Methods of producing ε-poly-L-lysine and its use are described in U.S. Patent No. 6,294,183 ("Antimicrobial Resin Composition and Antimicrobial Resin Molded Article Comprising Same"); U.S. Patent No. 5,294,552 ("Strain mass-producing ε-poly-L-lysine"); U.S. Patent No. 5,434,060 ("Method for Producing ε-poly-L-lysine"); U.S. Patent No. 5,759,844 ("Antibacterial Articles and Methods of Producing the Articles"); U.S. Patent No. 5,900,363 ("Process for producing ε-poly-L-lysine with immobilized Streptomyces albulus"); U.S. Patent No. 5,453,420 ("Food preservative and production thereof); U.S. Patent No. 5,009,907 ("Method for Treating Food to Control the Growth of Yeasts"); U.S. Patent No. 4,597,972 ("Nisin as an Antibotulinal Agent for Food Products"); and U.S. Patent No. 4,584,199 ("Aintibotulinal Agents for High Moisture Process Cheese Products"). These patents are incorporated herein by reference in their entireties.

A need exists for compositions which can be added to foods which are effective for preserving the food and preventing spoilage while not adversely affecting the foods taste and physical properties.

### SUMMARY

An antimicrobial composition is provided that includes an amount of nisin and ε-poly-L-lysine effective for preventing an increase in microbial counts in a foodstuff. Nisin and ε-poly-L-lysine act synergistically to prevent increases in microbial counts in foods without affecting the foods taste and physical properties. This synergistic antimicrobial composition may be used to inhibit common food pathogens and spoilage organisms such as *Listeria monocytogenes, Clostridium botulinum, Bacillus cereus, Staphylococcus aureus, Lactococcus* spp., *Lactobacillus* spp., *Leuconostoc* spp., *Streptococcus* spp., etc. The data shown in the examples demonstrated that the composition is especially effective against food pathogen *C. botulinum* and spoilage bacteria *Lactobacillus plantarum.* In many cases (see Examples) where nisin and ε-poly-L-lysine are essentially ineffective when used alone, the combination provides a very effective antimicrobial composition.

The combination of nisin and ε-poly-L-lysine is effective for preventing an increase in microbial counts in foodstuffs of about 1 log or less after about 3 days. The combination also exhibits bactericidal effect in some food systems, as it is effective in reducing microbial counts in some foodstuffs to 1 cfu/g or less in 5 days. The antimicrobial composition includes least about 1 part per million (ppm) nisin and at least about 10 ppm ε-poly-L-lysine, based on the weight of the antimicrobial composition. In an important aspect of the invention, the antimicrobial composition includes about 1 to about 100 ppm, preferably about 5 to about 10 ppm nisin, and about 10 to about 1000 ppm, preferably about 50 to about 500 ppm ε-poly-L-lysine, based on the weight of the antimicrobial composition. Nisin concentration can also be calculated by International Units per g (IU/g), with 1 ppm of nisin being 40 IU/g.

In another aspect, an antimicrobial composition is provided that includes an amount of nisin and ε-poly-L-lysine effective for maintaining a nisin activity in a foodstuff of about 90% or more of an initial nisin activity after about 14 days. The antimicrobial composition includes least about 1 ppm nisin and at least about 10 ppm ε-poly-L-lysine, based on the weight of the antimicrobial composition. In an important aspect of the invention, the antimicrobial composition includes about 1 to about 100 ppm, preferably about 5 to about 10 ppm nisin, and about 10 to about 1000 ppm, preferably about 50 to about 500 ppm ε-poly-L-lysine, based on the weight of the antimicrobial composition.

Nisin and ε-poly-L-lysine may be incorporated into foods either as a blend or separately. The foodstuff includes an amount of nisin and ε-poly-L-lysine effective for preventing an increase in microbial counts in the foodstuff of about 1 log or less after about 3 days. In this aspect, the foodstuff may include at least about 1 ppm nisin, preferably about 5 to about 10 ppm nisin, and at least about 10 ppm ε-poly-L-lysine, preferably about 50 to about 500 ppm ε-poly-L-lysine, all based on the total weight of the food composition. Foods to which nisin and ε-poly-L-lysine may be added include dressings, sauces, marinades, dairy foods, spreads, margarine, meats, pasta, noodles, cooked rice, rice pudding, vegetables and beverages.

In another aspect, a method is provided that utilizes nisin in combination with ε-poly-L-lysine in amounts effective for preventing an increase in microbial counts in foodstuffs such as sauces, dressings, beverages including tea containing beverages, marinades, dairy products, spreads, margarines, meats and the like. The method is effective for preventing an increase in microbial counts in a foodstuff of about 1 log or less after about 3 days. The method includes adding a blend of about 1 ppm to about 100 ppm nisin and about 10 to about 500 ppm ε-poly-L-lysine to a foodstuff. A blend of nisin and ε-poly-L-lysine may be added to the foodstuff or the nisin and ε-poly-L-lysine may be added separately. Nisin and ε-poly-L-lysine are effective for preventing an increase in or reducing microbial counts in foods having a temperature in the range of from about 0 to about 50°C.

### DETAILED DESCRIPTION

The combination of nisin and ε-poly-L-lysine acts synergistically as an antimicrobial composition which is effective for food preservation and for preventing food spoilage. Nisin and ε-poly-L-lysine may be blended or added directly to foods or contained in the medium in which the foods are packaged in, such as for example, the packing water for vegetables. The antimicrobial composition is effective at low temperatures as it can prevent increases in microbial counts in a foodstuff of about I log or less after about 3 days at a temperature of about 0 to about 50°C. The composition is also bactericidal in some foodstuff as it is effective in reducing microbial counts to 1 cfu/g or less. Commercially available preparations of nisin and of ε-poly-L-lysine may be utilized.

### Definitions

"Food preservation", as that term is used herein, includes methods which delay or prevent food spoilage due to microbes. Food preservation keeps food safe for consumption and inhibits or prevents nutrient deterioration or organoleptic changes causing food to become less palatable.

"Food spoilage", as that term is used herein, includes any alteration in the condition of food which makes it less palatable including changes in taste, smell, texture or appearance.

### Nisin

Commercial preparations of nisin may be utilized in the present compositions. For example, Nisaplin®, containing about 2.5% of pure nisin, which is equivalent to 1 million IU per gram, is available from Aplin & Barrett Ltd., Trowbridge, England and from Danisco A/S (Denmark). Chrisin® also containing about 1 million IU, nisin per gram, is available from Chr. Hanson A/S (Denmark). Nisaplin® is a purified nisin preparation which is a natural antimicrobial composition typically comprising 2.5% nisin, 77.5% sodium chloride, 12% protein, 6% Carbohydrate, and 2% moisture with a nisin activity of about 1x10⁶ IU/g. Nisin concentration in a product can be expressed as ppm or IU/g, as 1 ppm equals to 40 IU/g.

### ε-poly-L-lysine

ε-poly-L-lysine can be used as a free type or a salt type of an inorganic acid such as hydrochloric acid, sulfuric acid or phosphoric acid, or an organic acid such as acetic acid, propionic acid, fumaric acid, malic acid or citric acid. Both types of these salts of inorganic acids or organic acids as well as a free type have similar antibacterial effect.

The ε-poly-L-lysine has the structure 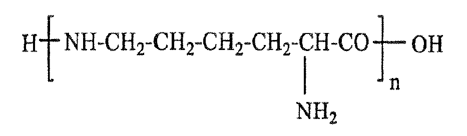 where n is about 25 to about 35.

ε-Poly-L-lysine is available under the tradename Save-ory™ GK128 from Chisso Corporation in Japan. This commercial preparation contains 1.0% ε-poly-L-lysine as the active antimicrobial agent, 30% glycerin, 68.8% water, a trace amount of organic acids for pH adjustment, and emulsifier. Save-ory™ products have been used in sushi and cooked rice for shelf-life extension in Japan.

### Preparation and Use of Antimicrobial Compositions

An antimicrobial composition may be prepared by blending nisin and ε-poly-L-lysine together in amounts effective for providing a composition with about 1 ppm to about 100 ppm, preferably 5 ppm to about 10 ppm nisin and about 10 to about 1000 ppm, preferably 50 to about 500 pp ε-poly-L-lysine, all based on the total weight of the composition. This antimicrobial composition may be added to foods in amounts effective for providing a level of at least about 1 ppm, preferably about 5 to about 10 ppm nisin, and at least about 10 ppm, preferably about 50 to about 500 ppm ε-poly-L-lysine in the food, the weight percents being based on the total weight of the foodstuff. Alternatively, nisin and ε-poly-L-lysine may be added separately to a foodstuff in amounts effective for providing the same concentration levels.

The comparative synergistic antimicrobial activity provided by the combination of nisin and ε-poly-L-lysine in various foodstuff is set forth below.

| Foodstuff or media | Nisin | ε-poly-L-lysine | Nisin + ε-poly-L-lysine |
|---|---|---|---|
| Beverages | + | + | +++ |
| Green beans packed in water | - | - | +++ |
| Savory cream | + | - | ++ |
| Hot dogs | + | - | + |
| Brain heart infusion agar (BHI) | +/- | - | +++ |
| BHI broth | - | - | +++ |

| | | | |
|---|---|---|---|
| + means antimicrobial activity, multiple + indicates increased antimicrobial activity - means no antimicrobial activity | | | |

### EXAMPLES

### Example 1. Inhibition of the growth of Clostridium botulinum spores by nisin and ε-poly-L-lysine

The growth of a bacterial spore to a vegetative cell generally includes the following stages: spore germination, shedding of the spore wall, outgrowth into vegetative cells and cell division. Different preservatives work at different stages in preventing bacterial spores from growing into multiplying vegetative cells. In this example, an agar well assay was used to determine overall antimicrobial activities of nisin and ε-poly-L-lysine in preventing growth of *C. botulinum* spores into vegetative cells. Four different *Clostridium botulinum* strains were used as the indicators. These strains included a proteolytic toxin type A strain, a proteolytic toxin type B strain, a non-proteolytic toxin type B strain and a non-proteolytic toxin type E strain. Brain heart infusion (BHI) agar medium containing *C. botulinum* spores at a concentration level of about 10⁴-10⁵ spores/ml was used to make Petri plates. Prior to the addition of indicator strains to the medium, spore preparations were first heat-shocked to activate spores and to eliminate vegetative cells that may have been present. Holes of 6 mm in diameter were aseptically bored into the agar medium.

The solutions of nisin and ε-poly-L-lysine were made by diluting a commercial nisin preparation Nisaplin® (from Danisco) and a commercial ε-poly-L-lysine product GK128 (from Chisso) with water into desired concentrations.

The samples were poured by pipette into the holes at the rate of 40 µl per hole. Also, solution pH was adjusted to 5.5 (to eliminate any pH inhibiting effect) using NaOH and HCl. The petri dishes were then incubated at 30°C for 24 hours under anaerobic conditions. Following the incubation, the indicator strain had grown and the visible inhibition zones were measured. Table 1 shows the inhibition zones formed by samples of nisin and ε-poly-L-lysine as well as their combinations.

The results indicate that neither nisin nor ε-poly-L-lysine alone at the given levels showed clear or strong inhibition zones against all *C. botulinum* strains tested. They were unable to inhibit the growth of *C. botulinum* from spores under optimal incubation conditions. However, in combination, they clearly exhibited inhibition of spore outgrowth of all tested *C*. *botulinum* strains. These data suggest a strong synergistic effect between these two antimicrobial components in preventing the outgrowth of *Clostridium botulinum* from spores and subsequent toxin formation.

**Table 1. Inhibition of the growth of C. botulinum spores by nisin and ε-poly-L-lysine at 30°C**

| Sample | Inhibition zone (mm) against indicator *C*. *botulinum* strains | | | |
|---|---|---|---|---|
| | Toxin type A (proteolytic) | Toxin type B (proteolytic) | Toxin type B (non-proteolytic) | Toxin type E |
| Nisin (250 IU/ml) | 0 | 0 | 7.98 | 0 |
| ε-poly-L-lysine (50 ppm) | 0 | 0 | 0 | 0 |
| Nisin (IU/ml) + ε-poly-L-lysine (50 ppm) | 8.85 | 9.88 | 11.76 | 10.68 |

### Example 2. Inhibition of the growth of C. botulinum vegetative cells by nisin and ε-poly-L-lysine

In this example, an agar well assay as described in Example 1 was used to determine antimicrobial activities of nisin and ε-poly-L-lysine in preventing the growth of *C. botulinum* from vegetative cells. Four different *Clostridium botulinum* strains were used as the indicators. These strains included a proteolytic toxin type A strain, a proteolytic toxin type B strain, and two non-proteolytic toxin type E strains. Heat-activated spores of these strains were incubated in BHI broth at 30°C for 24 hours and subsequently transferred to new BHI broth medium for incubation at 30°C overnight to provide vegetative cells. BHI agar medium containing these *C. botulinum* vegetative cells at a concentration level of about 3x10⁶ cfu/ml was used to make Petri plates. Holes of 6 mm in diameter were bored in the agar medium. The samples of nisin and ε-poly-L-lysine were prepared following the procedure described in Example 1, and the pH was adjusted to 5.5 (to eliminate any pH inhibiting effect) using NaOH and HCl. They were poured by pipette into the holes at the rate of 40 µl per hole. The plates were then incubated at 30°C for 24 hours under anaerobic conditions. Following the incubation, the indicator strain had grown and the visible inhibition zones were measured. Table 2 shows the inhibition zones formed by samples of nisin and ε-poly-L-lysine individually and in combinations.

**Table 2. Inhibition of C. botulinum vegetative cells by nisin and ε-poly-L-lysine at 30°C**

| Sample | Inhibition zone (mm) against indicator *C. botulinum* strains | | | |
|---|---|---|---|---|
| | 33A (proteolytic) | 53B (proteolytic) | Alaska E (non-proteolytic) | Beluga E (Non-proteolytic) |
| Nisin (IU/ml) | 0 | 0 | 7.95 | 0 |
| ε-poly-L-lysine (50 ppm) | 0 | 0 | 0 | 0 |
| Nisin (250 IU/ml) + ε-poly-L-lysine (50 ppm) | 9.67 | 9.55 | 10.99 | 11.30 |

The results suggest that nisin or ε-poly-L-lysine alone did not show clear or strong inhibition against the growth of *C. botulinum* strains from vegetative cells under optimal growth conditions, but their combination exhibited a clear inhibition against all strains of *C. botulinum* tested. These data suggest a strong synergy between nisin and ε-poly-L-lysine against growth of *C*. *botulinum* from vegetative cells.

### Example 3. Inhibition of the growth of C. botulinum vegetative cells at low temperature by nisin and ε-poly-L-lysine

In some cases, the temperature will influence the effectiveness of antimicrobials in inhibiting the growth of bacteria. In this example, the bioassay methods were the same as described in Example 2 except that the plate incubation conditions were different. The test strains included non-proteolytic toxin type E strains only. The samples of nisin and ε-poly-L-lysine were also prepared as described in Example 2 and they were poured by pipette into the holes at the rate of 40 µl per hole. The plates were then anaerobically incubated at 13°C for 48 hours. Following the incubation, the indicator strain had grown and the visible inhibition zones were measured. Table 3 shows the inhibition zones formed by samples of nisin, ε-poly-L-lysine and their combinations.

**Table 3. Inhibition of C. botulinum vegetative cells by nisin and ε-poly-L-lysine at 13°C**

| Sample | Inhibition zone (mm) against indicator *C. botulinum* strains | | |
|---|---|---|---|
| | Alaska E | Beluga E | E mixed strains |
| Nisin (250 IU/ml) | 7.95 | 0 | 8.38 |
| ε-poly-L-lysine (50 ppm) | 0 | 0 | 0 |
| Nisin (250 IU/ml) + ε-poly-L-lysine (50 ppm) | 11.61 | 12.16 | 12.01 |

Similar to the observations in Example 1 and 2, the combination of nisin and ε-poly-L-lysine exhibited a clear synergistic effect in inhibiting the growth of nonproteolytic *C*. *botulinum* at 13°C.

### Example 4. Effect of ε-poly-L-lysine on the apparent nisin activity

In this example, a standard agar well assay was used to determine nisin activity as well as the direct inhibition zones against an indicator strain of *Lactococcus lactis* subsp. *cremoris.* In the standard agar well assay, the overnight activated *L. lactis subsp. cremoris* was mixed in the BHI agar medium at a concentration of 10⁶ cfu/ml, and the medium was use for making plates. Twenty ml of medium was poured into each Petri dish (90x15mm). Six to seven wells of 6 mm in size were made on each dish. The samples of nisin and ε-poly-L-lysine were prepared according to the procedure described in Example 1. Before adding the samples into the wells, they were diluted by 5x with pH 2.0 buffer and boiled for 15 min. After cooling down to room temperature, 40 µg of the samples were added into each well in the dishes. Standard nisin solutions were also prepared in the same way for accurate comparison. The plates were then incubated anaerobically at 30°C overnight, and the inhibition zone size was measured. The nisin activity was calculated based on the standard curve made with the standard solutions assuming a linear relationship between nisin concentration and log of zone diameter. In the direct well assay, the plates and wells were made in the same way as described in the standard well assay, but the samples of nisin and ε-poly-L-lysine were prepared as described in Example 2 and were directly added into the wells at the level of 40 µg/well. The plates were anaerobically incubated at 30°C overnight and the zones of inhibition were read. Table 4 shows the results of the direct well assay and the standard nisin activity assay.

**Table 4. Effect of ε-poly-L-lysine on the apparent nisin activity against Lactococcus lactis**

| Sample | Inhibition zone (mm) | Apparent nisin activity (IU/ml) |
|---|---|---|
| Nisin (200 IU/ml) | 16.84 | 200 |
| ε-poly-L-lysine (50 ppm) | 0 | |
| Nisin (200 IU/ml) + ε-poly-L-lysine (50 ppm) | 19.35 | 540 |

Table 4 shows that the apparent nisin activity was significantly increased by ε-poly-L-lysine.

### Example 5. Inhibition of the growth of Lactobacillus plantarum in green bean pack water

To verify the nisin-ε-poly-L-lysine synergy observations obtained with the plate bioassay, and to validate their potential applications in food products, a simple model food system was used. In this example, a common food spoilage organism *Lactobacillus plantarum* strain isolated from salad dressing was selected as the target strain, and green bean pack water (autoclaved, pH 5.2) was used as a model liquid food system. The activated *L. plantarum* cells were inoculated into the green bean pack water at the level of 1.0x10⁶ cfu/ml. The pack water contained various concentrations of nisin and/or ε-poly-L-lysine, The inoculated samples were incubated at 30°C for one week. The live cells of *L. plantarum* were periodically counted on BHI plates. The results are summarized in Table 5.

The data in Table 5 suggest that nisin or ε-poly-L-lysine alone had very limited inhibition on the initial growth of *L. plantarum;* there was, at best, essentially no inhibition after 7 days of incubation. The combination of nisin and ε-poly-L-lysine significantly inhibited the growth of *L. plantarum* in this model liquid system. These results confirmed the findings with the bioassay experiments, suggesting a strong synergistic antimicrobial activity between nisin and ε-poly-L-lysine against certain pathogenic and spoilage bacteria. The results with the liquid food model also suggest potential applications of the synergistic antimicrobial system for pathogen and spoilage control in food and beverage products.

**Table 5. Inhibition of Lactobacillus plantarum in green bean pack water by nisin and ε-poly-L-lysine at 30°C**

| Treatment | Plate count (cfu/ml) | | |
|---|---|---|---|
| | 1 day | 5 days | 7 days |
| Control | 2.3x10⁹ | 1.0x10⁹ | 1.0x10⁸ |
| Nisin (250 IU/ml) | 5.0x10⁸ | 7.1x10⁸ | 1.2x10⁸ |
| Nisin (500 IU/ml) | 1.5x10⁵ | 5.4x10⁸ | 2.4x10⁸ |
| ε-poly-L-lysine (50 ppm) | 6.3x10⁸ | 2.5x10⁸ | 1.6x10⁸ |
| ε-poly-L-lysine (100 ppm) | 1.0x10⁷ | 2.1x10⁸ | 1.7x10⁸ |
| Nisin (250 IU/ml) + ε-poly-L-lysine (50 ppm) | 19 | <1 | <1 |
| Nisin (500 IU/ml) + ε -poly-L-lysine (50 ppm) | <1 | <1 | <1 |
| Nisin (500 IU/ml) + ε-poly-L-lysine (100 ppm) | <1 | <1 | <1 |

### Example 6. Increased antimicrobial activity of nisin by ε-poly-L-lysine in dairy product.

To test the efficacy of this invention in a dairy based food system, a dairy product (i.e. savory cream) was selected. The antimicrobial components were added to the regular ingredient mixture to prepare the savory cream. The nisin activity was determined according to the standard bioassay method as described in Example 4. Table 6 shows the results of measurable nisin activity of the savory cream containing nisin and ε-poly-L-lysine separately and in combination. The data suggest ε-poly-L-lysine increased the measurable nisin activity in this dairy product, but the extent was less than in a non-dairy system (i.e. green bean pack water as observed in Examples 4 and 5). This may be due to the interaction of dairy proteins with ε-poly-L-lysine, hence reducing its effectiveness as expressed in a non-dairy system. These results indicate the application of the invention in food systems may have certain limitations. It appears to work much better in non- or low protein food, and perhaps low fat systems and may have higher potential for application in such foods as vegetables, starch based foods, fruit juices, beverages, etc.

**Table 6. Antimicrobial activity of nisin and ε-poly-L-lysine in savory cream stored at 30°C**

| Treatment | Apparent nisin activity (IU/g) | | | | |
|---|---|---|---|---|---|
| | 2 days | 4 days | 5 days | 7 days | 14 days |
| Nisin (1000 IU/g) | 1003 | 1073 | 1062 | 883 | 801 |
| E-poly-L-lysine (100 ppm) | 0 | 0 | 0 | 0 | 0 |
| Nisin (1000 IU/g + ε-poly-L-lysine (100 ppm) | 1204 | 1249 | 1174 | 1015 | 1147 |

### Example 7. Increased antimicrobial activity of nisin by ε-poly-L-lysine in ready-to-drink beverage.

In this example, nisin and ε-poly-L-lysine were added to fruit juice-containing ready-to-drink (RTD) beverage to see if a synergistic antimicrobial activity could be observed. The antimicrobial activity was determined using the standard plate well diffusion assay as described in Example 1. The results are shown in Table 7.

**Table 7. Synergistic effect of antimicrobial activity between nisin and ε-poly-L-lysine in a RTD beverage**

| Sample | Inhibition zone (mm) | Apparent activity (IU/ml) |
|---|---|---|
| Nisin (250 IU/ml) | 11.59 | 223 |
| ε-poly-L-lysine (50 ppm) | 0 | - |
| Nisin (250 IU/ml) + ε-poly-L-lysine (50 ppm) | 13.73 | 493 |

The results in Table 7 clearly demonstrated that the apparent nisin activity was significantly increased by the presence of very low levels of ε-poly-L-lysine in the RTD beverage.

## Claims

1. An antimicrobial composition comprising an amount of nisin and ε-poly-L-lysine effective for preventing an increase in microbial counts in a foodstuff of 1 log or less after 3 days at a temperature of 0°C to 50°C, with the potential of preventing or delaying toxin formation by certain food borne pathogenic microorganisms.

2. An antimicrobial composition comprising an amount of nisin and ε-poly-L-lysine effective for maintaining a nisin activity in a foodstuff of 90% or more of an initial nisin activity after 14 days, wherein nisin activity is expressed in IU/g.

3. The antimicrobial composition of claim 1 or 2 comprising at least 1 ppm nisin and at least 10 ppm ε-poly-L-lysine.

4. The antimicrobial composition of claim 3 wherein the ε-poly-L-lysine has the structure 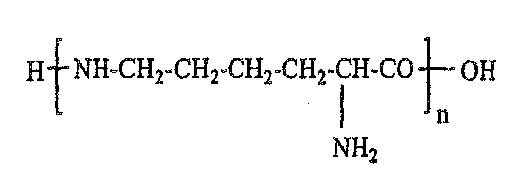 wherein n is 25 to 35.

5. A foodstuff comprising an amount of nisin and ε-poly-L-lysine effective for preventing an increase in microbial counts in a foodstuff of 1 log or less after 3 days at a temperature of 0°C to 50°C.

6. The foodstuff of claim 5 wherein the foodstuff includes an amount of nisin and ε-poly-L-lysine effective for maintaining a nisin activity in the foodstuff of 90% or more of an initial nisin activity after 14 days, wherein nisin activity is expressed in IU/g.

7. The foodstuff of Claim 5 or 6 comprising at least 1 ppm nisin and at least 10ppm ε-poly-L-lysine, based on the weight of the foodstuff.

8. The foodstuff of any one of Claims 5 to 7 wherein the ε-poly-L-lysine has the structure 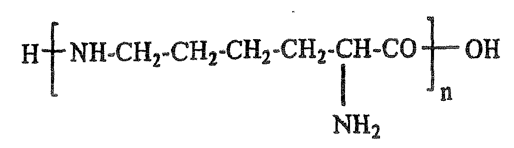 wherein n is 25 to 35.

9. The foodstuff of any one of Claims 5 to 8 wherein the foodstuff is selected from the group consisting of dressings, sauces, marinades, dairy foods, spreads, margarine, meats, pasta, noodles, cooked rice, rice pudding, vegetables and beverages.

10. A method for preventing an increase in microbial counts in a foodstuff comprising blending nisin and ε-poly-L-lysine with a foodstuff in an amount effective for preventing an increase of microbial counts in the foodstuff of 1 log or less after 3 days.

11. The method of claim 10 wherein the nisin and ε-poly-L-lysine are added to the foodstuff together.

12. The method of claim 10 wherein the nisin and ε-poly-L-lysine are added to the food stuff separately.

13. The method of any one of Claims 10 to 12 wherein the nisin and ε-poly-L-lysine are effective for preventing an increase in microbial counts in a foodstuff having a temperature of 0°C to 50°C.

14. The method of any one of Claims 10 to 13 wherein at least 1 ppm nisin and at least 10ppm ε-poly-L-lysine, based on the total weight of the foodstuff, are added.

15. The method of any one of Claims 10 to 14 wherein the ε-poly-L-lysine has the structure 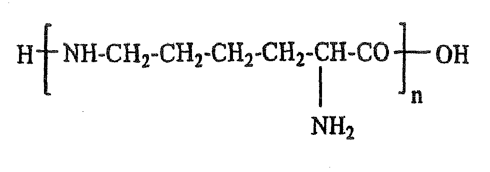 wherein n is 25 to 35.

16. The method of any one of Claims 10 to 15 wherein the foodstuff is selected from the group consisting of dressings, sauces, marinades, dairy foods, spreads, margarine, meats, pasta, noodles, cooked rice, rice pudding, vegetables and beverages.
